# EUROPEAN PATENT SPECIFICATION

(11) **EP 0 358 475 B1**
(45) Date of publication and mention of the grant of the patent: **26.01.1994**
(21) Application number: 89309011.8
(22) Date of filing: 06.09.1989
(51) Int. Cl.: B01J 8/00, F16L 59/02

(54) **Improved internal insulation for reactor vessel**
Innenisolierung für ein Reaktorgefäss
Isolation interne pour une enceinte de réacteur

(30) Priority: 06.09.1988 US 240294
(43) Date of publication of application: 14.03.1990
(73) Proprietor: EXXON RESEARCH AND ENGINEERING COMPANY, Florham Park, New Jersey 07932-0390 (US)
(72) Inventor: Lietz, Arthur Albert, Oakhurst New Jersey 07755 (US); Peterson, John Roger, Randolph New Jersey 07869 (US); Schlett, Paul Edward, Succasunna New Jersey 07876 (US)
(74) Representative: Mitchell, Alan

(56) References cited:
- EP-A- 0 108 628
- DE-A- 3 248 661
- FR-A- 1 084 648
- PATENT ABSTRACTS OF JAPAN, vol. 11, no. 246 (C-439)[2693], 11th August 1987; & JP-A-62 052 104 (MARUZEN ENG. K.K.) 06-03-1987
- PATENT ABSTRACTS OF JAPAN, vol. 12, no. 405 (C-539), 26th October 1988; & JP-A-63 145 417 (IBIDEN CO., LTD) 17-06-1988

## Description

The invention relates to improvements in the internal insulation of reactor vessels.

In processes in which gas suspended solids such as catalyst or coke are contacted or reacted in metal vessels at relatively high temperature conditions, it is conventional to line the interior of the vessel with a suitable refractory material to insulate the metal wall of the vessel from the process temperatures as well as to protect the metal wall from the corrosive and erosive effects of the material being processed within the vessel.

There are several conventional methods for installing insulating linings in such "cold wall" reactor vessels. One method is to secure a pre-cast or molded refractory brick lining to the vessel internal wall by metal anchors, adhesives or the like. Another method is to cast or gun a castable refractory lining in place inside the vessel.

None of these methods has proved entirely satisfactory for a number of reasons. Differences in the thermal coefficient of expansion between the vessel wall and the refractory lining often result in cracking of the lining and its separation from the wall during thermal cycling of the reactor with the concomitant loss of heat from the vessel and access of the hot gases and erosive solids to the vessel wall. As a consequence, the lining requires repair which is costly in terms of material and labor, and also in terms of loss of production from downtime of the reaction vessel.

Consequently, numerous attempts have been made to improve on the method of installing refractory linings in vessels requiring them. For example, in U.S. Patent 2,398,546 there is disclosed a vessel lining system which consists of a refractory lining which is spaced from the vessel wall. A particulate refractory material is included within the space between the wall and the lining, serving to minimize contact of the wall by erosive solids should the lining crack.

In U.S. Patent 2,982,623, a monolithic thermal insulating lining for a vessel is disclosed which includes a metal grid spaced from the vessel wall by studs. The metal grid has two cement layers applied to it, the first being a low density, high insulating cement and the other a high density, abrasion-resistant outer layer.

U.S. Patent 4,490,333 discloses a dual insulating layer in a reactor vessel using a ceramic anchor to fasten the second refractory layer to a previously-applied first insulating layer.

In U.S. Patent 4,490,334 there is described the use of curved ribs and mesh to hold a ceramic fiber blanket in place in a domed portion of a cylindrical reactor.

Since there has been a trend toward conducting petrochemical processes at ever more severe conditions than heretofore, further improvements in lining systems used in cold wall reactor vessels is even more important. Changing economic conditions and the necessity to increase productivity are additional factors driving the constant search for improved lining systems for reactor vessels.

DE-A-3248661 discloses the use of a heat resistant surface coating, based on silica sol, applied to the surface of a synthetic resin-bonded, mineral fiber, insulating bottom layer forming a lining in a vessel, so that the coating thermally shields the fibers from the heating effect of heating devices embedded in the vessel floor, which overlies the surface coating, or from the heating effect of a melt in the vessel. The coating is applied as a composition including fibrous, coarse-grain and fine-grain fillers. Silica sol, together with some fine-grain fillers, penetrates into the open-pores in the coated surface of the insulating layer to form an impregnation layer while the fibrous fillers (e.g. aluminium silicate fibers) and coarse grain fillers, together with remaining silica sol and fine-grain fillers, form a sealed coating on top of the impregnation layer.

Reference is also directed to PATENT ABSTRACT OF JAPAN, vol. 11, No. 246 (C-439) [2693] and JP-A-62 052 104, in which heat dissipation from a reactor is suppressed by lining the reactor inside wall surfaces with a heat-insulation material of ceramic fibers in an organic binder.

Lastly, FR-A-1084648 discloses a fibrous heat or sound insulating material rendered fireproof by impregnating its external surface with a solution of water soluble alkali metal silicate of low alkalinity.

According to the invention there is provided a reactor vessel for reacting gas-suspended solids, having insulation fastened to internal walls of the vessel, said insulation consisting of a ceramic fiber material, impregnated at the surface of the insulation exposed to the reagents in the vessel, with an agent which stiffens the fiber material and reduces erosion of the insulation under conditions of use.

The embodiment of the present invention to be described below provides an improved erosion-resistant ceramic insulating lining system for cold wall vessels which is heat resistant. Additionally, the insulating lining can be installed at lower cost than other lining systems.

The invention will be better understood from the following description given by way of example and with reference to the accompanying drawings, wherein :-
Figure 1 is a vertical cross-sectional view of one form of reaction vessel employing a ceramic fiber lining system.
Figure 2 is an enlarged cross-sectional view of a portion of the insulation lining.
Figure 3 is a graphic representation of a comparison of the insulating properties of the lining disclosed herein compared with a castable refractory lining.

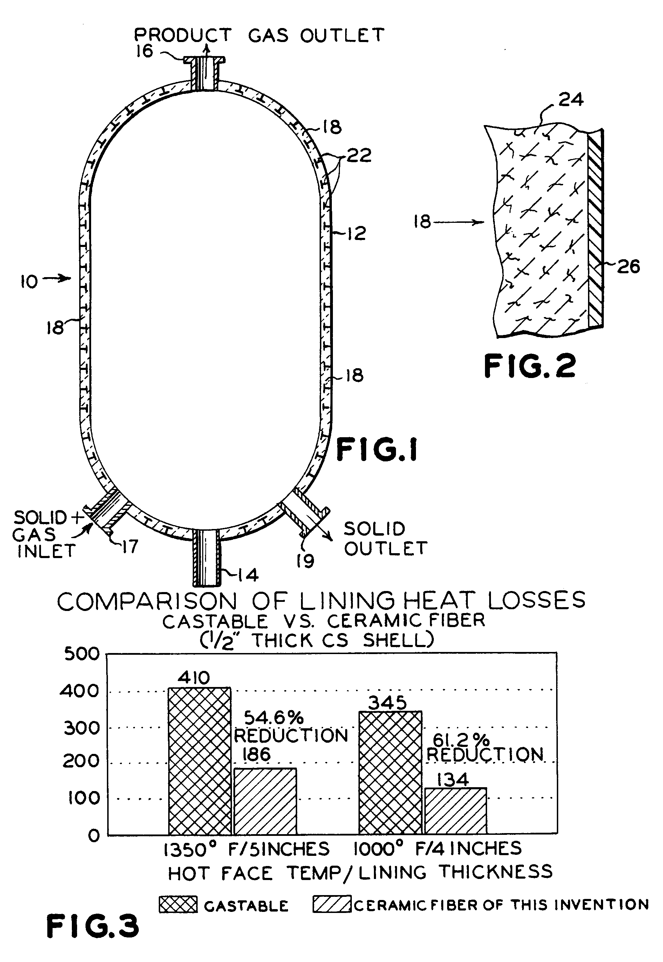

Referring now to the drawings and, in particular, to Figure 1, there is shown a process vessel 10 which includes an outer metal shell 12 having gas inlet and outlet openings 14 and 16, respectively, and a solids inlet and outlet 17 and 19, respectively. Perforated plates or grids (not shown) may be horizontally disposed within vessel 10 to support one or more beds of particulate material such as a catalyst bed. The vessel 10 also may contain cyclones (not shown) for separation of solids from product gas streams.

Fastened to the inner wall of the metal shell 12, for example, by welding, are a plurality of metal anchor members 22 on which to tie back the insulating layer 18.

As shown in Figure 2, the insulating layer 18 consists of a high density ceramic fiber insulation 24 whose surface exposed to the reagents in the vessel 10 is impregnated with a material 26 capable of stiffening the fiber insulation 24 and protecting it against erosion. In general, the insulation material 24 will have a density in the range of about 6 to 25 pounds per cubic foot (96.1 to 400.5 kg/m³), and preferably in the range of 12 to 25 pounds per cubic foot (192.2 to 400.5 kg/m³). In general, the fibers are in the range of about 2 to 3 µm in diameter and from 2 to 10 inches (5.1 to 25.4 cm) long, and are compressed or formed into a predetermined shape.

Suitable ceramic fiber materials include alumino-silicate fibers. Typically useful materials have alumina to silica weight ratios of from about 90 alumina to 10 silica to about 20 alumina to 80 silica.

An example of an alumino-silicate ceramic fiber insulation material formed as a modular panel is the alumino-silicate product sold under the Trademark Pyro-Bloc by Babcock and Wilcox, Augusta, Georgia.

The ceramic fiber insulation is impregnated with material 26 which is capable of stiffening the ceramic fiber insulation 24 and protecting it against erosion under conditions of use. Particularly preferred agents for impregnating the insulation material include sodium silicate, potassium silicate and silica. These are best applied as aqueous dispersions or colloidal sols. They are applied to the surface of the insulation by any convenient means such as spraying, dipping, brushing or the like. The agents may be applied before or after the insulation system is installed on the vessel wall. The amount of agent used will be that sufficient to render the insulation 24 rigid. In general, sufficient agent is used to provide from about 0.1 to about 10 pounds of agent per cubic foot of ceramic fiber material (about 1.6 kg to about 160.2 kg of agent per cubic meter of ceramic fibre material) and preferably from about 2 pounds to about 6 pounds per cubic foot of fiber (about 32.0 kg to about 96.1 kg per cubic meter of fiber). Since the agent is best applied as a liquid dispersion containing about 40 percent solids, the amount of dispersion used preferably is such that from about 5 to about 15 pounds (about 2.3 to 6.8 kg) of dispersion is absorbed per cubic foot of ceramic fiber. After applying the liquid agent to the insulation material, the material can be dried by any convenient means. Indeed, it is most convenient and practical to allow the material to dry out during the initial start-up of a vessel in which it is installed.

Optionally and preferably, the rigidizing agent is modified with a wetting and dispersing agent such as potassium and sodium sulfates and phosphates. In general, from about 0.01 weight percent to about 5.0 weight percent, and preferably from about 0.5 to 1.0 weight percent, of a wetting and dispersing agent is added to the rigidizing agent prior to its application to the ceramic fibers.

As indicated, shaped panels or sections of ceramic material are coated, thereby providing ceramic insulation modules. Typically, such ceramic fiber insulation modules will range in size from about 1 to about 4 square feet (about 0.09 m² to 0.37 m²), and have thickness in the range of about 2 inches (5.1 cm) to about 8 inches (20.3 cm).

The insulating capability of a ceramic fiber insulating module having a fiber density of 12 pounds per cubic foot (192.2 kg/m³) and impregnated with 12 pounds of aqueous colloidal silica rigidizing agent per cubic foot of ceramic fiber 192.2 kg of the rigidizing agent per cubic meter of ceramic fiber was compared with the thermal insulating property of a typical castable refractory lining using the hot wire technique, JISR2618-1979 of the Japan Standards Association. The ceramic fiber with agent was found to be about 65 percent lower in thermal conductivity than a typical castable refractory material. The reduced heat losses associated with reduced thermal conductivity are shown graphically in Figure 3. Basically they demonstrate that the insulating material disclosed herein shows a fifty to sixty percent reduction of heat loss when compared with an equivalent thickness of a typical castable refractory lining material.

Laboratory tests have also demonstrated that the ceramic fiber impregnated with the same concentration of colloidal silica rigidizing agent as stated above had an erosion resistance comparable to a conventional vessel lining castable. This was determined by erosion tests (ASTM C704) specified by the American Society for Testing Materials in which the quantity of SiC grit was reduced to 125 grams. In identical tests, the ceramic fiber material, without rigidizing agent, was completely destroyed.

The modular design of the insulating material disclosed herein is easily installed, and, of course, does not require curing and dry-out as castable lining systems require. Moreover, special equipment is not required to install the ceramic fiber lining system.

## Claims

1. A reactor vessel for reacting gas-suspended solids, having insulation (18) fastened to internal walls (12) of the vessel (10), said insulation (18) consisting of ceramic fiber material (24) impregnated, at the surface of the insulation (18) exposed to the reagents in the vessel (10), with an agent (26) which stiffens the fiber material and reduces erosion of the insulation (18) under conditions of use.

2. A reactor vessel according to claim 1, wherein said ceramic fiber material (24) is an alumino-silicate fiber.

3. A reactor vessel according to claim 1, wherein said ceramic fiber material (24) has a density in the range of from substantially 6 pounds per cubic foot (96.1 kg/m³) to substantially 25 pounds per cubic foot (400.5 kg/m³).

4. A reactor vessel according to claim 2 or claim 3 as appended to claim 2, wherein said alumino-silicate fiber has a ratio of alumina to silica of from substantially 90 to 10 to substantially 20 to 80.

5. A reactor vessel according to claim 3 or claim 4 as appended to claim 3, wherein said fiber material (24) has a density of from substantially 12 pounds per cubic foot (192.2 kg/m³) to substantially 25 pounds per cubic foot (400.5 kg/m³).

6. A reactor vessel according to any preceding claim, wherein said ceramic fiber material (24) is impregnated with an inorganic agent (26).

7. A reactor vessel according to claim 6, wherein said impregnating agent (26) is selected from the group consisting of sodium silicate, potassium silicate and colloidal silica and mixtures thereof.

8. A reactor vessel according to claim 7, wherein said ceramic fiber material (24) is impregnated with from substantially 0.1 to substantially 10 pounds of said agent per cubic foot of ceramic fiber (substantially 1.6 kg to substantially 160.2 kg of said agent per cubic meter of ceramic fiber).

9. A reactor vessel according to claim 8, wherein said ceramic fiber material (24) is impregnated with from substantially 2 to substantially 6 pounds of said agent per cubic foot of ceramic fiber (substantially 32.0 kg to substantially 96.1 kg of said agent per cubic meter of ceramic fiber).

10. A reactor vessel as claimed in any preceding claim, whereas said ceramic fiber material (4) is arranged in pre-formed sections.

## Patentansprüche

1. Reaktorgefäß zur Umsetzung von in Gas suspendierten Feststoffen mit an den Innenwänden (12) des Gefäßes (10) befestigter Isolation (18), wobei die Isolation (18) aus keramischem Fasermaterial (24) besteht, das an der den Reagenzien in dem Gefäß (10) ausgesetzten Oberfläche der Isolation (18) mit einem Mittel (26) imprägniert ist, das das Fasermaterial versteift und die Erosion der Isolierung (18) unter Betriebsbedingungen verringert.

2. Reaktorgefäß nach Anspruch 1, bei dem das keramische Fasermaterial (24) Aluminosilikatfaser ist.

3. Reaktorgefäß nach Anspruch 1, bei dem das keramische Fasermaterial (24) eine Dichte im Bereich von im wesentlichen 96.1 kg/m³ (6 engl. Pfund pro Kubikfuß) bis im wesentlichen 400,5 kg/m³ (25 engl. Pfund pro Kubikfuß) aufweist.

4. Reaktorgefäß nach Anspruch 2 oder den auf Anspruch 2 bezogenen Anspruch 3, bei dem die Aluminosilikatfaser ein Verhältnis von Aluminiumoxid zu Siliciumdioxid von im wesentlichen 90 : 10 bis im wesentlichen 20 : 80 aufweist.

5. Reaktorgefäß nach Anspruch 3 oder den auf Anspruch 3 bezogenen Anspruch 4, bei dem das Fasermaterial (24) eine Dichte von im wesentlichen 192,2 kg/m³ (12 engl. Pfund pro Kubikfuß) bis im wesentlichen 400,5 kg/m³ (25 engl. Pfund pro Kubikfuß) aufweist.

6. Reaktorgefäß nach einem der vorhergehenden Ansprüche, bei dem das keramische Fasermaterial (24) mit anorganischem Mittel (26) imprägniert ist.

7. Reaktorgefäß nach Anspruch 6, bei dem das Imprägniermittel (26) ausgewählt ist aus der Gruppe bestehend aus Natriumsilikat, Kaliumsilikat und kolloidalem Siliciumdioxid sowie Mischungen derselben.

8. Reaktorgefäß nach Anspruch 7, bei dem das keramische Fasermaterial (24) mit im wesentlichen 1,6 kg bis im wesentlichen 160,2 kg des Mittels pro Kubikmeter Keramikfaser (im wesentlichen 0,1 bis im wesentlichen 10 engl. Pfund pro Kubikfuß Keramikfaser) imprägniert ist.

9. Reaktorgefäß nach Anspruch 8, bei dem das keramische Fasermaterial (24) mit im wesentlichen 32,0 kg bis im wesentlichen 96,1 kg des Mittels pro Kubikmeter Keramikfaser (im wesentlichen 2 bis im wesentlichen 6 engl. Pfund des Mittels pro Kubikfuß Keramikfaser) imprägniert ist.

10. Reaktorgefäß nach einem der vorhergehenden Ansprüche, bei dem das keramische Fasermaterial (24) in vorgeformten Abschnitten vorliegt.

## Revendications

1. Enceinte de réacteur servant à faire réagir des substances solides en suspension dans un gaz, comportant un isolant (18) fixé à des parois intérieures (12) de l'enceinte (10), ledit isolant (18) étant formé d'un matériau fibreux céramique (24) imprégné, au niveau de la surface de l'isolant (18) exposée aux réactifs présents dans l'enceinte (10), par un agent (26) qui rigidifie le matériau fibreux et réduit l'érosion de l'isolant (18) dans les conditions d'utilisation.

2. Enceinte de réacteur selon la revendication 1, dans laquelle ledit matériau fibreux céramique (24) est une fibre formée d'alumino-silicate.

3. Enceinte de réacteur selon la revendication 1, dans laquelle ledit matériau fibreux céramique (24) possède une densité située dans la gamme allant de sensiblement 6 livres par pied cube (96,1 kg/m³) jusqu'à sensiblement 25 livres par pied cube (400,5 kg/m³).

4. Enceinte de réacteur selon la revendication 2 ou la revendication 3 annexée à la revendication 2, dans laquelle ladite fibre d'alumino-silicate possède un rapport de l'alumine à la silice allant de sensiblement 90 à 10 à sensiblement 20 à 80.

5. Enceinte de réacteur selon la revendication 3 ou la revendication 4 annexée à la revendication 3, dans laquelle ledit matériau fibreux (24) possède une densité comprise entre essentiellement 12 livres par pied cube (192,2 kg/m³) et sensiblement 25 livres par pied cube (400,5 kg/m³).

6. Enceinte de réacteur selon l'une quelconque des revendications précédentes, dans laquelle ledit matériau fibreux céramique (24) est imprégné d'un agent minéral (26).

7. Enceinte de réacteur selon la revendication 6, quelle ledit agent d'imprégnation (26) est choisi dans le groupe comprenant le silicate de sodium, le silicate de potassium et la silice colloïdale et des mélanges de ces substances.

8. Enceinte de réacteur selon la revendication 7, dans laquelle ledit matériau fibreux céramique (24) est imprégné par une quantité comprise entre sensiblement 0,1 et sensiblement 10 livres dudit agent par pied cube de fibre céramique (entre sensiblement 1,6 kg et sensiblement 160,2 kg dudit agent par mètre cube de fibre céramique).

9. Enceinte de réacteur selon la revendication 8, dans laquelle ledit matériau fibreux céramique (24) est imprégné par une quantité comprise entre sensiblement 2 et sensiblement 6 livres dudit agent par pied cube de fibre céramique (entre sensiblement 32,0 kg et sensiblement 96,1 kg dudit agent par mètre cube de fibre céramique).

10. Enceinte de réacteur selon l'une quelconque des revendications précédentes, dans laquelle ledit matériau fibreux céramique (4) est disposé dans des sections préformées.
